# EUROPEAN PATENT APPLICATION

(11) **EP 4 699 507 A1**
(43) Date of publication of application: **25.02.2026**
(21) Application number: 24792142.2
(22) Date of filing: 19.04.2024
(51) Int. Cl.: A47L 11/30

(54) **CLEANING DEVICE CONTROL METHOD, CLEANING DEVICE, AND COMPUTER READABLE STORAGE MEDIUM**

(30) Priority: 20.04.2023 CN 202310451658
(71) Applicant: Yunjing Intelligence (Shenzhen) Co., Ltd., Shenzhen, Guangdong 518000 (CN); Yunjing Intelligence Innovation (Shenzhen) Co., Ltd., Shenzhen, Guangdong 518000 (CN)
(72) Inventor: ZHUANG, Bin, Shenzhen, Guangdong 518000 (CN); HU, Hongwei, Shenzhen, Guangdong 518000 (CN)
(74) Representative: Metida
(86) International application number: PCT/CN2024/088907
(87) International publication number: WO 2024/217559

(57) **Abstract**

A control method for a cleaning device (200), a cleaning device (200), and a computer readable storage medium. The cleaning device (200) includes a sewage tank, a suction pipeline (240), a suction assembly (210), and a power component (250). The sewage tank comprises a sewage chamber (230) and a gas-solid-liquid separation chamber (220). An outlet of the suction pipeline (240) is connected to the gas-solid-liquid separation chamber (220). The suction assembly (210) is used for providing power to allow soiling to enter the gas-solid-liquid separation chamber (220) through the suction pipeline (240). The power component (250) is connected to the sewage chamber (230) and is used for providing power to allow sewage to flow into the sewage chamber (230) from the gas-solid-liquid separation chamber (220). The method includes: in response that the suction assembly (210) is switched on, controlling the power component (250) to be started so as to drive the sewage in the gas-solid-liquid separation chamber (220) to flow into the sewage chamber (230). Failure of the suction assembly (210) caused by the sewage flowing into the suction assembly (210) can be avoided, so that the service life of the suction assembly (210) is prolonged.

## Description

### Technical Field

The present application relates to a technical field of cleaning device, and more specifically to a method for controlling a cleaning device, a cleaning device, and a computer-readable storage medium.

### Background Art

Cleaning devices are now widely used in daily life, including vacuum cleaners and handheld floor scrubbers. During use, the cleaning device stores a mixture of sewage and soiling in a gas-solid-liquid separation chamber of a sewage tank. The sewage in the mixture is separated in the gas-solid-liquid separation chamber and then flows into a sewage chamber of the sewage tank.

In related technologies, a low separation efficiency of the gas-solid-liquid separation chamber results in a large amount of unseparated sewage remaining inside. When the cleaning device is in use, reciprocating push and pull of the cleaning device can easily cause the sewage in the gas-solid-liquid separation chamber to swirl, causing the sewage to be sucked into the suction assembly, causing the suction assembly to fail, seriously affecting a use of the suction assembly and even reducing its service life.

### Summery

The present application is proposed in consideration of the above-mentioned problems. According to one aspect of the present application, a control method for a cleaning device is provided, wherein the cleaning device comprises a sewage tank, a suction pipe, a suction assembly, and a power component; the sewage tank comprises a sewage chamber and a gas-solid-liquid separation chamber; an outlet of the suction pipe is connected to the gas-solid-liquid separation chamber; the suction assembly is used to provide power to cause soiling to enter the gas-solid-liquid separation chamber via the suction pipe; the power component is connected to the sewage chamber and is used to provide power to cause sewage to flow into the sewage chamber from the gas-solid-liquid separation chamber; the method comprises: in response that the suction assembly is switched on, starting the power component to drive the sewage in the gas-solid-liquid separation chamber to flow into the sewage chamber.

Exemplarily, a liquid level detector is provided in the gas-solid-liquid separation chamber for detecting a liquid level in the gas-solid-liquid separation chamber, and the method further comprises: acquiring liquid level information detected by the liquid level detector; in response that the liquid level indicated by the liquid level information is within any target liquid level range of at least two liquid level ranges, controlling the power component to operate according to a power corresponding to the target liquid level range; wherein the at least two liquid level ranges do not overlap with each other, and the higher a upper limit of the liquid level range, the greater a corresponding power of the power component.

Exemplarily, the cleaning device has a plurality of cleaning modes; the method further comprises: acquiring mode information of the cleaning device, wherein the mode information is used to indicate a current cleaning mode of the cleaning device, the current cleaning mode is one of the plurality of cleaning modes; controlling the power component to operate according to a power corresponding to the current cleaning mode.

Exemplarily, the cleaning device also further comprises a dirt detector, which is used to detect a dirt value of an area to be cleaned, and the dirt value represents a level of soiling of the area to be cleaned, the plurality of cleaning modes correspond to a plurality of levels of soiling one by one, the higher the level of soiling, the greater the power of the power component corresponding to the cleaning mode that is corresponding to the level of soiling.

Exemplarily, the method further comprises: acquiring power information of the suction assembly, wherein the power information is used to indicate a current suction power of the suction assembly; controlling the power component to operate according to a power corresponding to the current suction power of the suction assembly; wherein the greater the suction power of the suction assembly, the greater the corresponding power of the power component.

Exemplarily, the power component is a gas power component, and the cleaning device further comprises a suction channel, and the gas power component is connected to the sewage chamber through the suction channel to suck gas in the sewage chamber through the suction channel; a water presence detector is provided in the suction channel; the water presence detector is used to detect whether there is water in the suction channel; the control method further comprises: obtaining water presence information detected by the water presence detector; in response that water is determined to be in the suction channel based on the water presence information or an amount of water in the suction channel is determined to be reaching a first target amount of water based on the water presence information, controlling the power component to close; and/or, in response that the amount of water in the suction channel is determined to be reaching a second target water volume based on the water presence information, controlling the suction assembly to close.

Exemplarily, the water presence detector comprises an electrode group, the electrode group comprises two electrodes, and the water presence information is voltage information related to voltage at both ends of the electrode group, the method further comprises: in response that a voltage value corresponding to the water presence information is greater than a first voltage threshold, determining that there is no water in the suction channel; in response that the voltage value corresponding to the water presence information is less than or equal to the first voltage threshold, determining that there is water in the suction channel.

Exemplarily, the method also comprises: in response that the voltage value corresponding to the water presence information is less than or equal to the first voltage threshold and greater than a second voltage threshold, determining that there is a small amount of water in the suction channel; in response that the voltage value corresponding to the water presence information is less than or equal to the second voltage threshold, determining that there is a large amount of water in the suction channel and/or the sewage chamber is full of sewage.

Exemplarily, the first target amount of water is an amount of water corresponding to a small amount of water, and the second target amount of water is an amount of water corresponding to a large amount of water or an amount of water corresponding to the sewage being full.

Exemplarily, the method further comprises: obtaining water presence information for multiple times within a first predetermined time; in response that a ratio of a number of times that the water presence information indicates that there is water in the suction channel to a total number of times of obtaining the water presence information is greater than a first ratio threshold, determining that the sewage chamber is full of sewage.

Exemplarily, the method further comprises: obtaining the water presence information within a second predetermined time; in response that the voltage values corresponding to all the obtained water presence information are less than or equal to a third voltage threshold, determining that the sewage chamber is full of sewage; and/or, obtaining the water presence information multiple times within a third predetermined time; in response that a ratio of a number of times of obtaining the water presence information corresponding to the voltage value less than or equal to a fourth voltage threshold to the total number of times of obtaining the water presence information is greater than a second ratio threshold, determining that the sewage chamber is full of sewage; and/or, obtaining the water presence information multiple times within a fourth predetermined time; in response that a ratio of the number of times of obtaining the water presence information corresponding to the voltage value less than or equal to the fourth voltage threshold to the total number of times of obtaining the water presence information is greater than a third ratio threshold, determining that there is a large amount of water in the sewage chamber, and the third ratio threshold is less than or equal to the second ratio threshold.

Exemplarily, the method further comprises: in response that the suction assembly is turned off, starting timing to obtain a timing duration; in response that the timing duration reaches a target duration threshold, controlling the power component to turn off.

According to a second aspect of the present application, a cleaning device is also provided, including: a sewage tank, a suction pipe, a suction assembly, a power component and a control module; the sewage tank includes a sewage chamber and a gas-solid-liquid separation chamber; an outlet of the suction pipe is connected to the gas-solid-liquid separation chamber; the suction assembly is used to provide power to allow soiling to enter the gas-solid-liquid separation chamber through the suction pipe; the power component is connected to the sewage chamber, and is used to provide power to allow sewage to flow into the sewage chamber from the gas-solid-liquid separation chamber; the control module is used to perform following operations: in response that the suction assembly is switched on, starting the power component to drive the sewage in the gas-solid-liquid separation chamber to flow into the sewage chamber.

According to a third aspect of the present application, a computer-readable storage medium is further provided, the computer-readable storage medium storing a computer program/instruction, which implement the above-mentioned control method of the cleaning device when executed by a processor.

According to the above solution, by controlling the power component to start simultaneously with the suction assembly, the sewage in the soiling can be separated from the soiling with high efficiency and speed as the soiling enters the gas-solid-liquid separation chamber. As a result, sewage in the gas-solid-liquid separation chamber is less likely to accumulate, thereby preventing sewage from flowing into the suction assembly which may cause failure of the suction assembly, thereby increasing the service life of the suction assembly.

The above description is only an overview of the technical solution of the present application. In order to more clearly understand the technical means of the present application, it can be implemented in accordance with the contents of the specification. In order to make the above and other purposes, features and advantages of the present application more obvious and easy to understand, the specific implementation methods of the present application are listed below.

### BRIEF DESCRIPTION OF THE DRAWINGS

The above and other purposes, features, and advantages of the present application will become more apparent through a more detailed description of the embodiments of the present application in conjunction with the accompanying drawings. The accompanying drawings are intended to provide a further understanding of the embodiments of the present application and constitute a part of the specification. Together with the embodiments of the present application, they are used to explain the present application and do not constitute a limitation of the present application. In the drawings, same reference numerals generally represent same components or steps.
FIG. 1 is a schematic structural diagram of a cleaning device in the related art;
FIG. 2 is a schematic structural diagram of a cleaning device according to an embodiment of the present application;
FIG. 3 is a schematic structural diagram of a cleaning device according to another embodiment of the present application;
FIG. 4 is a schematic diagram showing a timing sequence of starting a cleaning device according to an embodiment of the present application; and
FIG. 5 is a schematic diagram showing a timing sequence of shutting down a cleaning device according to an embodiment of the present application.

### DETAILED DESCRIPTION

In order to make the purpose, technical solutions and advantages of the present application more apparent, the following is a detailed description of example embodiments of the present application with reference to the accompanying drawings. Obviously, the described embodiments are only part of the embodiments of the present application, rather than all the embodiments of the present application, and it should be understood that the present application is not limited to the example embodiments described herein. Based on the embodiments of the present application described in the present application, all other embodiments obtained by those skilled in the art without creative work should fall within the scope of protection of the present application.

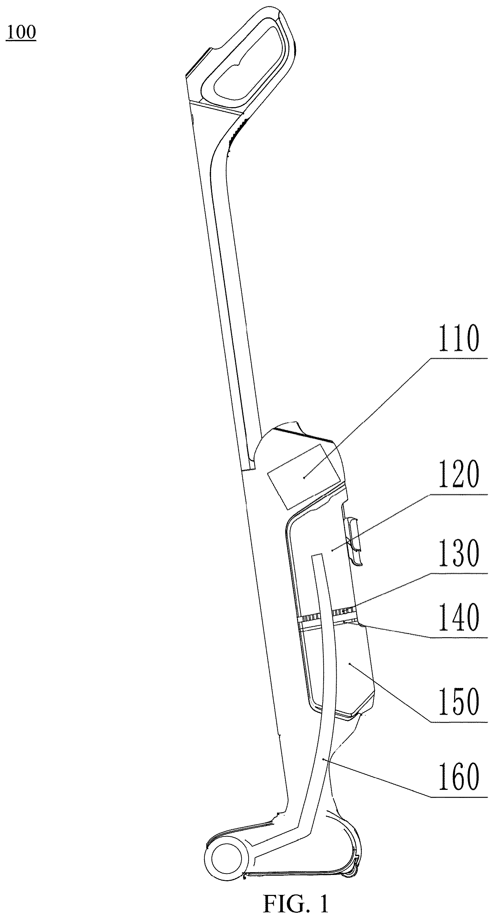

The cleaning device includes a vacuum cleaner, a handheld floor scrubber, and the like. Taking the handheld floor scrubber as an example, during use, the handheld floor scrubber can wipe the floor, absorb a mixture of sewage and debris (the mixture can be referred to as "soiling"), and store the mixture in the handheld floor scrubber's sewage tank. FIG. 1 shows a schematic structural diagram of a cleaning device in the related art. As shown in FIG. 1, a cleaning device 100 includes a sewage tank, a partition 140, a filter component 130, a suction pipe 160, and a suction assembly 110. The sewage tank includes an air-solid-liquid separation chamber 120 and a sewage chamber 150. An outlet of the suction pipe 160 is connected to the air-solid-liquid separation chamber 120. The suction assembly 110 is used to provide power to allow soiling to enter the air-solid-liquid separation chamber 120 through the suction pipe 160. The air-solid-liquid separation chamber 120 is provided with the filter component 130, and the partition 140 is provided with a sewage discharge hole. Within the sewage tank, there is a certain space between the filter component 130 and the partition 140, known as a pre-storage chamber. Sewage within the gas-solid-liquid separation chamber 120 is filtered by the filter component 130 and then flows into the pre-storage chamber between the filter component 130 and the partition 140. It is then discharged into the sewage chamber 150 through the sewage discharge hole. While this solution prevents sewage within the sewage chamber 150 from flowing back into the suction pipe 160 through the gas-solid-liquid separation chamber 120 when the cleaning device 100 is lying down, as operation of the suction assembly 110 generates negative pressure within the gas-solid-liquid separation chamber 120, and sewage can only flow into the sewage chamber 150 through the sewage discharge hole, this severely restricts a speed at which sewage flows into the sewage chamber 150, reducing a separation efficiency of the gas-solid-liquid separation chamber 120 and resulting in a large amount of unseparated sewage remaining in the gas-solid-liquid separation chamber 120. In a process of the cleaning device being pushed and pulled back and forth, it is easy to cause the sewage in the gas-solid-liquid separation chamber 120 to be agitated, and the sewage is easily sucked by the suction assembly 110, thereby flowing into the suction assembly 110, which can easily cause the suction assembly 110 to fail, affect the use of the suction assembly 110, and even reduce a service life of the suction assembly 110. In order to solve the above technical problems, the present application provides a method for controlling a cleaning device, a cleaning device and a computer-readable storage medium. The method can significantly improve an efficiency of separating sewage, thereby effectively preventing an accumulation of sewage in the gas-solid-liquid separation chamber. In this way, a failure of the suction assembly can be avoided. In addition, the method can prevent the suction assembly from sucking sewage out of the cleaning device, thereby ensuring a cleaning effect of the cleaning device.

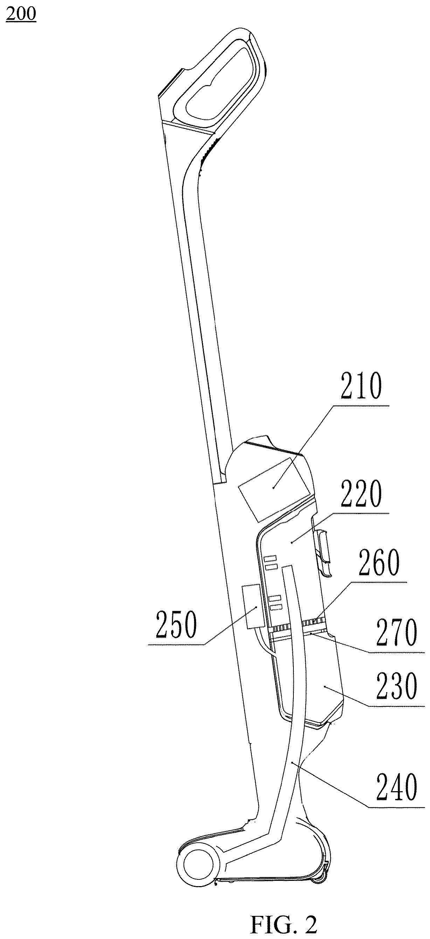

For the convenience of description, the structure of the cleaning device of the present application is first introduced. According to one aspect of an embodiment of the present application, the cleaning device is provided. FIG. 2 shows a schematic structural diagram of the cleaning device according to an embodiment of the present application. As shown in FIG. 2, the cleaning device 200 includes a sewage tank, a suction pipe 240, a suction assembly 210, a power component 250 and a control module (not shown in the figure); the sewage tank includes a sewage chamber 230 and a gas-solid-liquid separation chamber 220; an outlet of the suction pipe 240 is connected to the gas-solid-liquid separation chamber 220; the suction assembly 210 is used to provide power to allow soiling to enter the gas-solid-liquid separation chamber 220 through the suction pipe 240; the power component 250 is connected to the sewage chamber 230, and is used to provide power to allow sewage to flow into the sewage chamber 230 from the gas-solid-liquid separation chamber 220. The sewage tank, the suction pipe 240, the suction assembly 210, the gas-solid-liquid separation chamber 220, the sewage chamber 230, a filter component 260 and a partition 270 in the cleaning device 200 are similar to the structures and functions of corresponding components in the cleaning device 100. the description of the corresponding components in the cleaning device 100 can be referred to to understand the structures and functions of the above components in the cleaning device 200.

The control module is used to perform following operations: when the suction assembly 210 is switched on, the power component 250 is controlled to start, so as to drive the sewage in the gas-solid-liquid separation chamber 220 to flow into the sewage chamber 230.

Illustratively, the control module may include any suitable processing device with data processing and/or instruction execution capabilities. For example, the control module may be implemented using one or a combination of a programmable logic controller (PLC), a digital signal processor (DSP), a field programmable gate array (FPGA), a programmable logic array (PLA), a central processing unit (CPU), an application-specific integrated circuit (ASIC), a microcontroller unit (MCU), or other processing units. For example, the control module may be a main control chip in the cleaning device, i.e., a main control MCU.

Illustratively, the power component 250 can be a gas power component, such as a fan or a vacuum pump. In the embodiment shown in FIG. 2, a suction end of the power component 250 is connected to the sewage chamber 230, and an air outlet of the power component 250 is located outside the cleaning device. During operation, the soiling within the gas-solid-liquid separation chamber 220 is filtered through the filter component 260. The sewage included in the soiling flows into the pre-storage chamber between the filter component 260 and the partition 270. The power component 250 draws gas from the sewage chamber 230 to the outside, reducing the pressure within the sewage chamber 230. A pressure difference is generated between the sewage chamber 230 and the gas-solid-liquid separation chamber 220. Under an action of pressure, the sewage in the pre-storage chamber rapidly flows into the sewage chamber 230 through the sewage discharge hole in the partition 270, thereby accelerating the separation of sewage within the gas-solid-liquid separation chamber 220. Alternatively, in one embodiment, the suction end of the power component 250 is connected to the sewage chamber 230, and the air outlet of the power component 250 is connected to the gas-solid-liquid separation chamber 220. In this embodiment, the sewage chamber 230 and the gas-solid-liquid separation chamber 220 form a closed-loop connection. Under the action of the power component 250, the gas in the sewage chamber 230 is extracted and transported to the gas-solid-liquid separation chamber 220. This solution reduces the pressure in the sewage chamber 230, increases the pressure in the gas-solid-liquid separation chamber 220, and increases a pressure difference between the sewage chamber 230 and the gas-solid-liquid separation chamber 220. A basic operating environment of the power component 250 is a negative pressure environment formed by the suction assembly 210. This means that when operating, the power component 250 no longer needs to consume power to overcome the negative pressure formed by the suction assembly 210 in the gas-solid-liquid separation chamber 220. Instead, it operates directly based on this negative pressure, achieving the driving of the entire closed-loop pipeline under a negative pressure state, thereby achieving a driving of sewage from the gas-solid-liquid separation chamber 220 to the sewage chamber 230. As a result, the operating efficiency of the power component 250 is improved compared to the case where the air outlet of the power component 250 is connected to the outside world. At the same time, when sewage in the sewage chamber 230 flows into the power component 250, because the air outlet of the power component 250 is connected to the gas-solid-liquid separation chamber 220, the sewage flowing into the power component 250 will be transported to the gas-solid-liquid separation chamber 220, effectively preventing the sewage from flowing out.

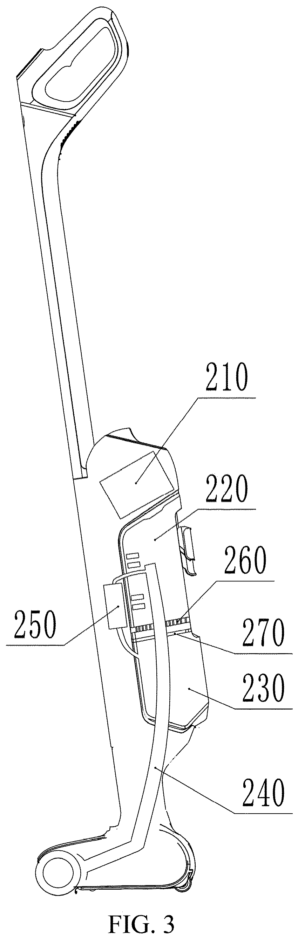

FIG. 3 shows a schematic structural diagram of a cleaning device according to another embodiment of the present application. As shown in FIG. 3, the suction end of the power component 250 is connected to the sewage chamber 230, and the air outlet of the power component 250 is connected to the suction pipe 240. In this embodiment, the sewage chamber 230, the suction pipe 240 and the gas-solid-liquid separation chamber 220 form a closed loop connection. Under the action of the power component 250, the gas in the sewage chamber 230 is extracted and transported to the suction pipe 240, and enters the gas-solid-liquid separation chamber 220 via the suction pipe 240. On the one hand, this solution reduces the pressure in the sewage chamber 230, increases the pressure in the gas-solid-liquid separation chamber 220, and increases the pressure difference between the sewage chamber 230 and the gas-solid-liquid separation chamber 220. The basic operating environment of the power component 250 is the negative pressure environment created by the suction assembly 210. This allows the power component 250 to save at least some power when operating to overcome the negative pressure created by the suction assembly 210 within the gas-solid-liquid separation chamber 220. Instead, the power component 250 operates directly on the basis of this negative pressure, driving the entire closed-loop pipeline under a negative pressure state, thereby driving the sewage from the gas-solid-liquid separation chamber 220 to the sewage chamber 230. This improves the operating efficiency of the power component 250 compared to the case where the air outlet of the power component 250 is connected to an outside world. On the other hand, when the sewage in the sewage chamber 230 flows into the power component 250, since the air outlet of the power component 250 is connected to the suction pipe 240, the sewage flowing into the power component 250 will flow into the gas-solid-liquid separation chamber 220 through the suction pipe 240, effectively preventing the sewage from flowing out.

Exemplarily, the power component 250 may also be a liquid power component, such as a peristaltic pump, an axial flow pump, a centrifugal pump, or the like. In one embodiment, a liquid extraction end of the power component 250 is connected to the pre-storage chamber between the filter component 260 and the partition 270, and the liquid outlet end of the power component 250 is connected to the sewage chamber 230. The power component 250 operates to transport the sewage in the pre-storage chamber to the sewage chamber. In a specific embodiment, the power component 250 is disposed within the pre-storage chamber. The liquid outlet end of the power component 250 is connected to the sewage chamber 230 via a sewage outlet on the partition 270. In this embodiment, the sewage in the pre-storage chamber is directly transported to the sewage chamber 230 via the power component 250.

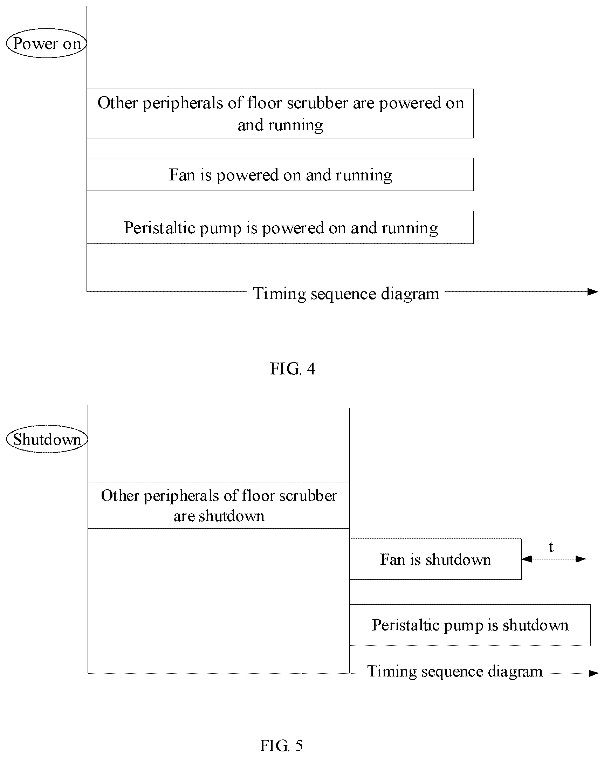

FIG. 4 illustrates a schematic diagram showing a timing sequence of starting a cleaning device according to one embodiment of the present application. In this embodiment, the cleaning device is a floor scrubber, the suction assembly is a fan, and the power component is a peristaltic pump. The floor scrubber includes components that require electrical control, such as the fan, the peristaltic pump, a display, and indicator lights. For simplicity, in the following description, components that require electrical control, other than the fan and the peristaltic pump, are collectively referred to as "other peripherals." As shown in FIG. 4, when the floor scrubber is powered on, the other peripherals are powered on and operated. Furthermore, when the floor scrubber is powered on, the fan is also powered on to provide power to allow soiling to enter the gas-solid-liquid separation chamber through the suction pipe. Simultaneously, when the floor scrubber is powered on, the peristaltic pump is powered on to provide power to allow sewage to flow into the sewage chamber from the gas-solid-liquid separation chamber. When the fan is powered on, the soiling begins to enter the gas-solid-liquid separation chamber. At this point, the power component can be activated. It will be understood that, as shown in FIG. 2, after the soiling enters the gas-solid-liquid separation chamber 220, the sewage can be separated from the soiling by the filter component 260. After the soiling enters the gas-solid-liquid separation chamber 220, the power component 250 can provide power for the sewage in the soiling, so that the sewage in the soiling enters the sewage chamber 230 with higher efficiency, thereby preventing the sewage from accumulating in the gas-solid-liquid separation chamber 220.

In the above technical solution, the control module controls the power component to start synchronously with the suction assembly. This allows for the efficient and rapid separation of the sewage from the soiling as it flows into the gas-solid-liquid separation chamber. This prevents the sewage from accumulating in the gas-solid-liquid separation chamber, preventing the sewage from flowing into the suction assembly and causing failure, thereby extending the service life of the suction assembly.

According to another aspect of an embodiment of the present application, a control method for the cleaning device is provided. The cleaning device includes a sewage tank, a suction pipe, a suction assembly, and a power component. The sewage tank includes a sewage chamber and a gas-solid-liquid separation chamber. The outlet of the suction pipe is connected to the gas-solid-liquid separation chamber. The suction assembly is configured to provide power to cause soiling to enter the gas-solid-liquid separation chamber through the suction pipe. The power component is connected to the sewage chamber and is configured to provide power to cause the sewage to flow into the sewage chamber from the gas-solid-liquid separation chamber. The control method includes following steps: when the suction assembly is activated, the power component is activated to drive the sewage in the gas-solid-liquid separation chamber into the sewage chamber.

Through the above description of the structure of the cleaning device, the implementation of the control method of the cleaning device in this embodiment can be understood, which will not be repeated here.

According to the above technical solution, by controlling the power component to start synchronously with the suction assembly, the sewage can be separated from the sewage with high efficiency and speed as the sewage flows into the gas-solid-liquid separation chamber. As a result, the sewage in the gas-solid-liquid separation chamber is less likely to accumulate, helping to prevent the sewage from flowing into the suction assembly and causing failure of the suction assembly, thereby extending the service life of the suction assembly.

Exemplarily, a liquid level detector is provided within the gas-solid-liquid separation chamber for detecting a liquid level within the gas-solid-liquid separation chamber. The control method may further include following steps: obtaining liquid level information detected by the liquid level detector. When the liquid level indicated by the liquid level information is within any target liquid level range of at least two liquid level ranges, controlling the power component to operate at a power corresponding to a target liquid level range. The at least two liquid level ranges do not overlap, and the higher the upper limit of the liquid level range, the greater the corresponding power.

The liquid level detector can be any existing or future developed liquid level detector capable of single-point or multi-point sensing of liquid level. By way of example and not limitation, the liquid level detector can be a photoelectric liquid level sensor, an electrode -type liquid level sensor, a capacitive liquid level sensor, etc. Examples of the photoelectric liquid level sensor includes an integrated photoelectric liquid level sensor, a separate photoelectric liquid level sensor, and a multi-point photoelectric liquid level sensor.

The number of liquid level detectors can be one. In one embodiment, the number of liquid level detectors is one. The liquid level ranges include a first liquid level range and a second liquid level range. The liquid level detector is capable of detecting whether the liquid level in the gas-solid-liquid separation chamber has reached a target liquid level. In this context, reaching a certain position (e.g., a target liquid level) can include being equal to or higher than that position. When the liquid level in the gas-solid-liquid separation chamber reaches the target liquid level corresponding to the liquid level detector, the liquid level indicated by the liquid level information is within the second liquid level range. Otherwise, the liquid level indicated by the liquid level information is within the first liquid level range. In a specific embodiment, the first liquid level range is [0, A], and the second liquid level range is [A, B]. Where A represents the target liquid level corresponding to the liquid level detector, and B represents the highest liquid level in the gas-solid-liquid separation chamber. Exemplarily, the liquid level detector can be an electrode-type liquid level sensor, which may include an electrode group, the electrode group includes two electrodes. Placing the two electrodes at a certain height position in any liquid container (such as the gas-solid-liquid separation chamber) can detect whether the liquid in the liquid container has reached the height position where the electrodes are located. When the liquid does not reach the height of the electrodes, the electrodes are exposed to air, which is equivalent to a disconnected circuit. A resistance of the electrode group is infinite, and a voltage across the electrode group is close to a power supply voltage (e.g., Vcc). Conversely, when the liquid reaches the height of the electrodes, the liquid acts as a conductive medium, connecting the two electrodes. The voltage across the electrode group at this time is different from the voltage when the liquid has not reached the electrodes. Therefore, the voltage across the electrode group can reflect whether there is liquid between the electrodes, that is, whether the liquid level in the liquid container has reached the target level. It can be understood that any multi-point liquid level detector or multiple single-point liquid level detectors can distinguish between two adjacent liquid level ranges within which the liquid level in the liquid container falls. The target liquid level corresponding to the liquid level detector is the upper limit of the first liquid level range and is the lower limit of the second liquid level range of these two adjacent liquid level ranges. The upper limit of the first liquid level range is lower than the upper limit of the second liquid level range.

Multiple liquid level detectors can also be provided based on actual detection requirements. For example, when there are three liquid level ranges, the number of liquid level detectors can be two. When there are five liquid level ranges, the number of liquid level detectors can be four. When there are multiple liquid level detectors, the multiple liquid level detectors can be respectively arranged at different heights within the gas-solid-liquid separation chamber, so that the liquid level information detected by the multiple liquid level detectors can indicate the target liquid level range within which a current liquid level is located.

Multiple liquid level detectors can be detachably arranged inside or outside the gas-solid-liquid separation chamber, or embedded in a side wall of the gas-solid-liquid separation chamber. Taking the example of multiple liquid level detectors being separate photoelectric liquid level sensors, each photoelectric liquid level sensor can be arranged on the side wall of the gas-solid-liquid separation chamber and correspond to a certain target liquid level of the liquid. By way of example and not limitation, a prism can also be arranged at a position where the photoelectric liquid level sensor is arranged on an inner wall of the gas-solid-liquid separation chamber. The photoelectric liquid level sensor can include a light-emitting diode and a photosensitive receiver. When the liquid level reaches the target liquid level, the liquid submerges the prism, and the light emitted by the light-emitting diode is refracted into the liquid, so that the photosensitive receiver cannot receive light or can only receive a small amount of light. If the liquid level does not reach the target liquid level and therefore does not submerge the prism, the light emitted by the light-emitting diode can be directly reflected back to the photosensitive receiver by the prism. In this way, the liquid level in the gas-solid-liquid separation chamber can be detected.

A total liquid level range from a lowest liquid level to a highest liquid level within the gas-solid-liquid separation chamber can be divided into at least two liquid level ranges. Each liquid level range has a corresponding power. The powers corresponding to any two liquid level ranges can be the same or different. In one embodiment, different powers can be pre-set, each corresponding to a different liquid level range. That is, at least two liquid level ranges can correspond one-to-one with at least two different powers. In the embodiment described above where there are two liquid level ranges, the powers can include a first power and a second power. The first power corresponds to the first liquid level range, and the second power corresponds to the second liquid level range. Assuming that the upper limit of the second liquid level range is higher than the upper limit of the first liquid level range, the second power can be greater than the first power. When the suction assembly begins operating, the soiling begins to enter the gas-solid-liquid separation chamber. At this time, the liquid level in the gas-solid-liquid separation chamber is within the first liquid level range, and the power component operates at the first power. As the soiling in the gas-solid-liquid separation chamber continues to increase until the liquid level in the gas-solid-liquid separation chamber is within the second liquid level range, the power component is controlled to switch from the first power to the second power. In the embodiment described above where the first liquid level range is [0, A] and the second liquid level range is [A, B], if the liquid level indicated by current liquid level information is less than A, the power component is controlled to operate at the first power. If the liquid level indicated by the current liquid level information is greater than or equal to A, the power component is controlled to operate at the second power.

It is understood that if the liquid level in the gas-solid-liquid separation chamber is within the second liquid level range, it indicates that the efficiency of separating the sewage is low when the power component is operating at the first power, and the desired efficiency of separating the sewage cannot be achieved. Therefore, increasing the power of the power component from the first power to the second power can accelerate a speed at which the sewage flows into the sewage chamber, improve the efficiency of separating the sewage in the gas-solid-liquid separation chamber, and prevent a level of the sewage in the gas-solid-liquid separation chamber from continuing to rise.

Exemplarily, the control method may further include: within a fifth predetermined time after the power of the power component is switched from the first power to the second power based on the liquid level indicated by the liquid level information, if the target liquid level range in which the liquid level indicated by the liquid level information is located has not changed from the second liquid level range to the first liquid level range, then increasing the power of the power component. The second power is greater than the first power, the second liquid level range is a liquid level range corresponding to the second power, and the first liquid level range is a liquid level range whose upper limit is lower than the upper limit of the second liquid level range. Optionally, increasing the power of the power component may include: switching the power from the second power to a third power, the third power being a power corresponding to a third liquid level range, and the third liquid level range being a liquid level range adjacent to the second liquid level range and having an upper limit higher than the upper limit of the second liquid level range.

For example, after controlling the power component to operate at the second power, the liquid level changes in the gas-solid-liquid separation chamber can continue to be monitored. If the liquid level in the gas-solid-liquid separation chamber does not decrease, the power of the power component can continue to be increased. In one embodiment, the power of the power component also includes a third power, and the third power is greater than the second power. After the power component operates at the second power, the liquid level information detected by the liquid level detector continues to be obtained. If the liquid level indicated by the liquid level information is always in the second liquid level range after the fifth predetermined time, the power of the power component can be controlled to increase from the second power to the third power. The fifth predetermined time can be set to any appropriate duration as needed. If the liquid level indicated by the liquid level information drops to the first liquid level range within the fifth predetermined time, the power of the power component can be controlled to drop from the second power to the first power, thereby reducing operating energy consumption of the cleaning device. Alternatively, when the liquid level in the gas-solid-liquid separation chamber drops to the first liquid level range, the power component can also be controlled to continue to operate at the second power to ensure the sewage separation efficiency of the cleaning device.

According to the above technical solution, by acquiring liquid level information in the gas-solid-liquid separation chamber and controlling the power of the power component based on this liquid level information, the power of the power component can be adjusted promptly when the liquid level in the gas-solid-liquid separation chamber changes. On the one hand, this ensures the sewage separation efficiency in the gas-solid-liquid separation chamber and prevents sewage accumulation. On the other hand, it also prevents the power component from operating at excessive power, which would cause energy loss.

Exemplarily, the cleaning device has multiple cleaning modes. Optionally, the multiple cleaning modes can correspond to different levels of soiling of an area to be cleaned. In one embodiment, the cleaning modes include an intensive cleaning mode and a normal cleaning mode. The intensive cleaning mode corresponds to a situation where the area to be cleaned is more dirty. When the cleaning mode of the cleaning device is the intensive cleaning mode, the suction assembly operates at a higher power, so that the soiling in the area to be cleaned can be quickly cleaned. The normal cleaning mode corresponds to a situation where the area to be cleaned is less dirty. An operating power of the suction assembly corresponding to the normal cleaning mode is lower than an operating power of the suction assembly corresponding to the intensive cleaning mode. It can be understood that a current cleaning mode of the cleaning device can be manually set by the user during use, or it can be automatically adjusted according to the detected dirtiness of the area to be cleaned. For example, when the cleaning mode of the cleaning device is the normal cleaning mode, if it is detected that the area to be cleaned is more dirty, the cleaning mode of the cleaning device can be controlled to automatically switch from the normal cleaning mode to the intensive cleaning mode.

The control method may further include following steps: obtaining mode information of the cleaning device, the mode information being used to indicate a current cleaning mode of the cleaning device, the current cleaning mode being one of a plurality of cleaning modes; and controlling the power component to operate according to the power corresponding to the current cleaning mode.

In one embodiment, powers corresponding to multiple cleaning modes can be preset. The powers corresponding to any two cleaning modes can be the same or different. For example, multiple cleaning modes can correspond to multiple different powers. In the embodiment described above where the cleaning modes include the intensive cleaning mode and the normal cleaning mode, the powers can include a fourth power and a fifth power. The fourth power corresponds to the normal cleaning mode, and the fifth power corresponds to the intensive cleaning mode. The fifth power can be greater than the fourth power. After the cleaning device is turned on, mode information of the cleaning device is obtained. If the current cleaning mode of the cleaning device is the normal cleaning mode, the power component is controlled to operate at the fourth power. If the current cleaning mode of the cleaning device is the intensive cleaning mode, the power component is controlled to operate at the fifth power. In the embodiment described above where the cleaning device can automatically adjust the cleaning mode, when the cleaning mode of the cleaning device changes, the power component can be controlled to operate according to the power corresponding to the changed cleaning mode. For example, when the cleaning mode of the cleaning device switches from the normal cleaning mode to the intensive cleaning mode, the power of the power component is controlled to increase from the fourth power to the fifth power. This allows the power of the power component to match the current cleaning mode of the cleaning device, ensuring the sewage separation efficiency within the gas-solid-liquid separation chamber.

In one embodiment, the power of the power component can be determined based on the liquid level in the gas-solid-liquid separation chamber and the current cleaning mode of the cleaning device. In the embodiment in which the power of the power component includes the fourth power and the fifth power, the liquid level detector can be provided in the gas-solid-liquid separation chamber, and the liquid level range in this embodiment can include the first liquid level range and the second liquid level range. When the current cleaning mode of the cleaning device is the normal cleaning mode, the power component can be controlled to operate at the fourth power, and the liquid level information detected by the liquid level detector can be obtained. When it is detected that the liquid level of the gas-solid-liquid separation chamber is in the second liquid level range, the power of the power component can be controlled to increase from the fourth power to the fifth power.

The above solution can control the power component to operate adaptively according to the power corresponding to the current cleaning mode, which can better prevent the sewage from flowing into the suction assembly that causing the suction assembly to fail. In addition, this adaptive working method can effectively improve the user experience.

Exemplarily, the cleaning device also includes a dirt detector, which is used to detect a dirt value of the area to be cleaned. The dirt value indicates the level of soiling of the area to be cleaned. Multiple cleaning modes correspond one-to-one to multiple levels of soiling. The higher the level of soiling, the greater the power of the power component corresponding to the cleaning mode corresponding to the level of soiling.

As described above, the multiple cleaning modes can correspond to different levels of soiling in the area to be cleaned. In some embodiments, the cleaning device can adjust a current cleaning mode based on the dirt value of the area to be cleaned. For example, when the cleaning device is in normal cleaning mode, if the dirt value detected is high, the cleaning mode of the cleaning device can be controlled to switch from the normal cleaning mode to the intensive cleaning mode.

The dirt detector can be any type of dirt detector currently available or developed in the future. For example, the dirt detector can be a colorimetric sensor. The colorimetric sensor is mounted on the suction pipe. The colorimetric sensor can detect colorimetric information of the sewage in the suction pipe using visible light and determine soiling information of the sewage based on a depth of the sewage's color. Alternatively, the dirt detector can be a turbidity sensor. The turbidity sensor is mounted on the suction pipe. During detection, the turbidity sensor can detect a turbidity of the sewage in the suction pipe based on a transmission principle. Specifically, when detection light emitted by the turbidity sensor passes through a certain amount of sewage, an amount of detection light that penetrates depends on an amount of dirt in the sewage. As the amount of dirt increases, the amount of detection light that penetrates the sewage decreases. The turbidity sensor can calculate the soiling information of the sewage based on the amount of detection light that penetrates the sewage. Alternatively, the dirt detector can also include a turbidity sensor and a colorimetric sensor, and determine the soiling information of the sewage based on the measured turbidity and colority.

In a specific embodiment, the dirt detector can be an infrared detection device installed on the suction pipe. The infrared detection device includes an infrared emitting tube and an infrared receiving tube. The infrared emitting tube emits quantifiable infrared light, and the infrared receiving tube receives the infrared light. When the infrared light passes through the sewage in the suction pipe, physical phenomena such as reflection, refraction, and transmission occur, resulting in attenuation and obstruction of the infrared light along the path. The dirt value is ultimately determined based on a signal strength received by the infrared receiving tube. It is understood that the number of dirt detectors can be one or more. When multiple dirt detectors are used, a dirt value can optionally be determined based on an average of the dirt values measured by multiple dirt detectors.

The cleaning mode corresponds to the dirt value and the power of the power component. This way, the power component can operate at a power that matches the level of soiling of the area being cleaned. The higher the level of soiling , the higher the power of the power component, allowing for faster and better cleaning of the area.

According to the above technical solution, by matching the power of the power component with the level of soiling, it can be ensured that the cleaning device has good sewage separation efficiency when cleaning different levels of soiling.

Exemplarily, the control method further includes: obtaining power information of the suction assembly, the power information being used to indicate a current suction power of the suction assembly. Controlling the power component to operate according to the power corresponding to the current suction power of the suction assembly. The greater the suction power of the suction assembly, the greater the corresponding power of the power component.

The suction power of the suction assembly may have a corresponding power of the power component. The powers of the power component corresponding to any two different suction powers may be the same or different. For example, different suction powers may correspond to different powers of the power component. It is understandable that the greater the power of the suction assembly, the faster the soiling enters the gas-solid-liquid separation chamber, and the faster the sewage accumulates in the gas-solid-liquid separation chamber. Therefore, a higher sewage separation efficiency is required to prevent the sewage from accumulating in the gas-solid-liquid separation chamber. In one embodiment, a conversion relationship between the power of the suction assembly and the power of the power component may be defined, so that the power of the power component can be directly determined based on a value of the current power information of the suction assembly. For example, the conversion relationship between the power of the power component and the power of the suction assembly may be *C = N*D.* Wherein, *C* represents the power of the power component, D represents the current suction power of the suction assembly, and *N* represents a conversion coefficient. *N* can be set to any suitable value as needed, for example, *N* can be any value in a range of [0.05, 1). In a specific embodiment, *N =* 0.3. If the current suction power of the suction assembly *D* = 200W, then the power of the power component *C* = 60W.

In one embodiment, a target power range in which the current suction power of the suction assembly is located can be determined based on the power information of the suction assembly. The power component is then controlled to operate according to the power corresponding to the target power range. The target power range represents a power range in which the current suction power of the suction assembly is located. There can be multiple power ranges, and the multiple power ranges do not overlap with each other. The multiple power ranges correspond one-to-one to the multiple powers of the power component. For example, the higher a upper limit of the power range, the greater the corresponding power of the power component can be. For example, there are three power ranges of the suction assembly, a first power range corresponds to a first power of the power component, a second power range corresponds to a second power of the power component, and a third power range corresponds to a third power of the power component. It can be understood that during the operation of the suction assembly, the suction power fluctuates continuously. By determining the power of the power component using the target power range in which the suction power is located, it is possible to prevent the power of the power component from being frequently switched and improve the stability of the power component operation.

The above technical solution uses the current suction power of the suction assembly to determine the power of the power component, which can match the power of the power component with the current suction power of the suction assembly, thereby ensuring a good sewage separation effect when the suction assembly operates at different suction powers.

Exemplarily, the power component is a gas power component, and the cleaning device further includes a suction channel, through which the gas power component is connected to the sewage chamber so as to suck the gas in the sewage chamber through the suction channel. As mentioned above, the gas power component can be a fan, a vacuum pump, etc. The power component extracts the gas in the sewage chamber to form a negative pressure in the sewage chamber, thereby accelerating the speed at which the sewage in the gas-solid-liquid separation chamber is transported to the sewage chamber under the action of pressure. During the operation of the power component, when there is a lot of sewage in the sewage chamber, some of the sewage may be extracted together with the gas in the sewage chamber. Sewage flowing into the power component will cause the power component to fail and reduce the service life of the power component. In order to prevent sewage from being sucked by the power component, a water presence detector can be provided in the suction channel; the water presence detector is used to detect whether there is water in the suction channel.

The control method may further include following steps: obtaining water presence information detected by a water presence detector, and controlling the power component to shut down when the water presence information indicates that there is water in the suction channel or when an amount of water in the suction channel reaches a first target amount of water based on the water presence information.

In one embodiment, if water presence information indicates the presence of water in the suction channel, the power component is controlled to shut down. The water presence detector can be implemented using any existing or future developed liquid level detector capable of single-point or multi-point sensing of liquid level. In other words, the water presence detector itself can be a liquid level detector. By way of example and not limitation, the liquid level detector can be a photoelectric liquid level sensor, an electrode-type liquid level sensor, a capacitive liquid level sensor, or the like.

The water presence detector can be set at any position in the suction channel. For example, in a middle of the suction channel, at a suction inlet of the suction channel, at a suction outlet of the suction channel, etc. The suction inlet refers to an end of the suction channel connected to the sewage chamber, and the suction outlet refers to an end of the suction channel connected to the power component. In a specific embodiment, the water presence detector is set at the suction inlet of the suction channel. In this example, when sewage flows into the inlet of the suction channel, the water presence detector can detect inflow of water into the suction channel in time. It can be understood that when the power component is turned off, its power gradually decreases from the current power to zero. During this process, sewage may still flow into the inside of the power component under the action of the power component. Setting the sewage detector at the suction inlet of the suction channel can control the power component to be closed when sewage flows into the inlet of the suction channel. Thereby, the possibility of sewage continuing to flow into the power component during the shutdown process of the power component can be reduced, and water can be prevented from flowing into the power component.

Multiple water presence detectors can be provided, and these detectors can be sequentially arranged along an axial direction of the suction channel. In one embodiment, the power component can be controlled to shut down when any one of the multiple water presence detectors detects water in the suction channel. Using multiple water presence detectors can avoid detection errors associated with a single water presence detector, further effectively preventing water from flowing into the power component.

In another embodiment, if it is determined based on presence or absence of water information that the amount of water in the suction channel reaches a first target amount of water, the power component is controlled to be closed. Optionally, the first target amount of water can be set as needed. It can be understood that in the process of the cleaning device being pushed and pulled back and forth, the sewage in the sewage chamber will be agitated. At this time, some sewage may splash into the suction channel. The amount of sewage flowing into the suction channel may be small and not enough to affect the power component. The first target amount of water can be a minimum amount of water that can be considered to have an impact on the normal operation of the power component. Thus, the first target amount of water can be set, and when the amount of water in the suction channel reaches the first target amount of water, the power component is controlled to be closed, otherwise the power component can be allowed to continue working. By setting the first target amount of water, the power component can be more accurately controlled to be closed based on the impact of sewage on the power component, so as to reduce the execution of meaningless closing operations.

According to the above technical solution, by detecting whether there is water in the suction channel, when there is water in the suction channel or when the water level in the suction channel reaches the first target water level, the power component is promptly controlled to shut down, which can effectively prevent water from flowing into the power component and is beneficial to improving the service life of the power component.

Exemplarily, the control method may further include following steps: obtaining water presence information detected by the water presence detector; and controlling the suction assembly to close when determining that an amount of water in the suction channel reaches a second target amount of water based on the water presence information.

This embodiment can be understood by referring to the above embodiment of controlling the power component to shut down when the amount of water in the suction channel reaches the first target amount of water based on the water presence information, which will not be described in detail here. The second target amount of water can be the same as or different from the first target amount of water.

In the embodiment shown in FIG. 2, the inlet of the suction channel is connected to a upper portion of a sidewall of the sewage chamber 230. When the sewage chamber is nearly full or already full, a large amount of sewage will also flow into the suction channel. This amount of sewage is the second target amount of water. In other words, when the amount of water in the suction channel reaches the second target amount of water, it indicates that the sewage chamber is nearly full or already full. Therefore, to ensure effective cleaning, the suction assembly can be controlled to shut off, thereby ensuring effective sewage separation within the gas-solid-liquid separation chamber.

According to the above technical solution, by detecting whether there is water in the suction channel, when the amount of water in the suction channel reaches the second target amount of water, the suction assembly is promptly controlled to be closed, which can effectively ensure the sewage separation effect.

Exemplarily, the water presence detector includes an electrode group including two electrodes, and the water presence information is voltage information related to the voltage across the electrode group. It can be understood that when there is no water in the suction channel, circuit between the two electrodes is equivalent to an open circuit, and the voltage between the two electrodes is close to the voltage of the power supply supplying power to the two electrodes. When water is present in the suction channel, the two electrodes conduct, and the voltage across the electrode group decreases. Therefore, the presence of water can be determined based on the voltage information.

The control method may further include following steps: when a voltage value corresponding to the water presence information is greater than a first voltage threshold, determining that there is no water in the suction channel; when the voltage value corresponding to the water presence information is less than or equal to the first voltage threshold, determining that there is water in the suction channel.

A supply voltage of the electrode group is typically low. For example, to facilitate monitoring of voltage changes across the electrode group, after collecting a voltage value across the electrode group, an amplifier circuit can be used to amplify the voltage value, and the amplified voltage value can be used as the voltage value corresponding to the water presence information. An amplification factor can be set as needed. For example, it can be 10x, 1.5x, 2.0x, etc. In one embodiment, the first voltage threshold can be 4V. When the voltage value corresponding to the water presence information is greater than 4V, it is determined that there is no water in the suction channel. When the voltage value corresponding to the water presence information is less than or equal to 4V, it is determined that there is water in the suction channel. For example, when the voltage value corresponding to the water presence information is 3.5V, it is determined that there is water in the suction channel. For example, when the voltage value corresponding to the water presence information determines that there is water in the suction channel, the power component can be controlled to shut down. Alternatively, the voltage value across the electrode group can be directly used as the voltage value corresponding to the water presence information. In one embodiment, the first voltage threshold can be 400 mV. When the voltage corresponding to the water presence information is greater than 400mV, it is determined that there is no water in the suction channel. When the voltage corresponding to the water presence information is less than or equal to 400mV, it is determined that there is water in the suction channel. In one specific embodiment, when the voltage corresponding to the water presence information is less than 400mV, it can be determined that the water level in the sewage chamber is at least 1/2 of a capacity of the sewage chamber, that is, at least half full.

The above technical solution uses voltage information related to the voltage at both ends of the electrode group to accurately determine whether there is water in the suction channel. Based on the determination result, the power component can be controlled to shut down in a timely manner, thereby preventing power component failure caused by water ingress.

Exemplarily, the control method further includes following steps: determining that there is a small amount of water in the suction channel when the voltage value corresponding to the water presence information is less than or equal to the first voltage threshold and greater than a second voltage threshold;

When the voltage value corresponding to the water presence information is less than or equal to the second voltage threshold, it is determined that there is a large amount of water in the suction channel and/or the sewage chamber is full of sewage.

The first voltage threshold and the second voltage threshold can be set to any appropriate value as needed. In the present application, when there is a large amount of water or a small amount of water in the suction channel, the voltage threshold detected by the water presence detector can be set according to actual needs. For example, the water level between the two electrodes being less than half of a maximum water level in the suction channel can be regarded as a small amount of water in the suction channel. The water level between the two electrodes being greater than or equal to the half of the maximum water level in the suction channel can also be regarded as a large amount of water in the suction channel. Therefore, the voltage value detected when the water level between the two electrodes is equal to half of the maximum water level in the suction channel can be optionally used as the second voltage threshold.

Optionally, the first target amount of water in the above embodiment corresponds to the small amount of water, and the second target amount of water in the above embodiment corresponds to the large amount of water or a full sewage state. In a specific embodiment, the power component can be controlled to shut down when the water level in the suction channel is determined to have reached the small amount of water based on the water presence information. When the water level in the suction channel is determined to have reached the large amount of water or the full sewage state based on the water presence information, the suction assembly can be controlled to shut down.

From the above description of the electrode-type liquid level sensor, it can be understood that the electrode group is equivalent to a capacitor, and the water and/or air between the two electrodes is medium of the capacitor. Due to different dielectric constants of water and air, when the suction channel changes from being dry to being filled with water, and the water in the suction channel gradually increases, the water level between the two electrodes rises and the medium changes. As the medium changes, the voltage across the electrode group will also change accordingly. The electrode group can form a loop with a voltage divider module. The higher the conductivity of the electrode group, the smaller the voltage across the electrode group. Therefore, the water level in the suction channel can be determined based on the voltage across the electrode group. The lower the voltage across the electrode group, the more water can be determined in the suction channel.

In some embodiments, an exhaust port is provided on the upper portion of the sidewall of the sewage chamber, and the suction inlet of the suction channel can be connected to the exhaust port. In this case, when it is determined based on the water presence information that there is a large amount of water in the suction channel, it can be further determined that the sewage chamber is full of sewage.

The second voltage threshold can represent a highest voltage value corresponding to the water presence information when a large amount of water is present in the suction channel. As described above, as the water level between the two electrodes rises, the voltage across the electrode group decreases. Therefore, the second voltage threshold is lower than the first voltage threshold. In one embodiment, the first voltage threshold is 400mV and the second voltage threshold is 200mV. When the voltage value corresponding to the water presence information is greater than 400mV, it is determined that there is no water in the suction channel. When the voltage value corresponding to the water presence information is less than or equal to 400mV and greater than 200mV, it is determined that there is a small amount of water in the suction channel. When the voltage value corresponding to the water presence information is less than or equal to 200mV, it is determined that there is a large amount of water in the suction channel and the sewage chamber is full of sewage. For example, when the voltage value corresponding to the water presence information is 150mV, it can be determined that there is a large amount of water in the suction channel and the sewage chamber is full of sewage. Because detection values of water presence detectors manufactured by different manufacturers and different materials vary, the first and second voltage thresholds can be determined based on actual conditions.

In one embodiment, when it is determined that the sewage chamber is full of sewage, the cleaning device may output a prompt information to remind the user to process the sewage in the sewage chamber.

In one or some embodiments, the cleaning device may include an information output device. Exemplarily, the information output device may include one or more of a display device, a buzzer alarm, a speaker, a lighting device, a communication device, and the like. The communication device may include any wired communication device and/or wireless communication device. Exemplarily, the prompt information described herein may include one or more of audio, text, image, video, and light. The display device is configured to output one or more of text, image, and video information, while the buzzer alarm and the speaker are configured to output audio information. The lighting device is configured to output light information. The communication device is configured to transmit prompt information in any form to any associated device. The associated device may include, but are not limited to, a personal computer, a server, and a mobile terminal (e.g., a user's smartphone). For example, the information output device may be a buzzer alarm that alerts the user that the sewage chamber is full. For another example, the information output device may be a display device that displays characters such as "Sewage Full" to alert the user that the sewage chamber is full. In one embodiment, the prompt may be displayed in a form of a text and an image on a user terminal connected to the cleaning device network, or may be displayed via light and/or voice prompts on the cleaning device, such as an indicator light or a voice player. For example, when it is determined that the sewage chamber is full of sewage, a voice prompt of "sewage is full" may be given.

According to the above technical solution, the voltage value corresponding to the water presence information can be used to accurately determine the amount of water in the suction channel and/or a condition in the sewage chamber. This result can serve as a basis for subsequent operations (such as outputting the above prompt information).

Exemplarily, the control method may further include following steps: obtaining water presence information multiple times within a first predetermined time; when a ratio of a number of times the obtained water presence information indicates that there is water in the suction channel to a total number of the water presence information is obtained is greater than a first ratio threshold, determining that the sewage chamber is full of sewage.

The first predetermined time can be set according to usage requirements. For example, the first predetermined time can be set to any value in the range of [5s, 30s], such as 6s, 10s, 15s, 20s, and so on. Exemplarily, within the first predetermined time, the control module can obtain water presence information from the water presence detector based on a preset frequency. The preset frequency can be set according to actual needs. The higher the preset frequency, the more water presence information is obtained within the first predetermined time, the more accurate the determination result based on the water presence information is, and the more computing resources are required. Otherwise, vice versa. For example, the preset frequency can be set to 2 times/s. Assuming that a group of water presence information can be obtained each time, in the embodiment where the above-mentioned predetermined time is 6s, then 12 groups of water presence information can be obtained.

The first ratio threshold can be set to any appropriate value as needed. For example, the first ratio threshold can be set according to a fault tolerance rate. The larger the first ratio threshold, the higher the fault tolerance rate. The smaller the first ratio threshold, the lower the fault tolerance rate. It can be understood that in the process of the cleaning device being pushed and pulled back and forth, the sewage in the sewage chamber will intermittently shake. When the ratio of the number of times there is water in the suction channel within the first predetermined time to the total number of times the water presence information is obtained is greater than the target ratio threshold, it can be considered that when the sewage shakes, it will intermittently shake into the suction channel, and the frequency of sewage shaking into the suction channel per unit time is large. At this time, it can be determined that the sewage chamber is full of sewage.

In one embodiment, the first ratio threshold can be any value in the range of [0.4, 1], for example, 5/6. In the above embodiment where there are 12 groups of water presence information, if the number of times that water is present in the suction channel is 11 or 12, it can be determined that the sewage chamber is full of sewage.

The above technical solution can accurately determine whether the sewage chamber is full of sewage by counting the number of times there is water in the suction channel over a period of time, and by comparing the ratio of the number of times to the total number of times of obtaining the water presence information with the target ratio threshold.

Exemplarily, the control method may further include following steps: obtaining water presence information within a second predetermined time; and determining that the sewage chamber is full of sewage when voltage values corresponding to all the obtained water presence information are less than or equal to a third voltage threshold.

Similar to the first predetermined time, the second predetermined time can be set according to the detection fault tolerance rate. For example, the second predetermined time can be in the range of [0.5s, 20s], such as 1s, 5s, 10s, 15s, etc. The third voltage threshold can be set as needed. The third voltage threshold can be equal to or different from the above-mentioned first voltage threshold. The third voltage threshold can be equal to or different from the above-mentioned second voltage threshold. For example, the third voltage threshold can be equal to the second voltage threshold. Since the condition for judging whether the sewage is full, " the voltage values corresponding to all the obtained water presence information are less than or equal to the third voltage threshold", is relatively strict, the third voltage threshold being lower can be appropriately used for judgment.

In one embodiment, the frequency for acquiring water presence information is 2 Hz. The second predetermined time is 1.5 seconds. The third voltage threshold is 200 mV. In this embodiment, when the voltage values corresponding to the water presence information obtained three times in succession are all less than or equal to 200mV, it means that the sewage chamber is full of sewage. At this point, the suction assembly can optionally be controlled to shut down.

Optionally, the control method may further include following steps: obtaining water presence information within a third predetermined time; when a ratio of the number of times of obtaining the water presence information corresponding to the voltage value less than or equal to a fourth voltage threshold to the total number of times of obtaining the water presence information is greater than a second ratio threshold, determining that the sewage chamber is full of sewage.

Similar to the first predetermined time, the third predetermined time can be set based on the detection tolerance. For example, the third predetermined time can be within the range of [0.5s, 30s], such as 6s, 10s, 15s, 20s, and so on. The second ratio threshold can be set to any appropriate value as needed. Similar to the first ratio threshold, the second ratio threshold can be set based on the tolerance. In one embodiment, the second ratio threshold can be any value within the range of [0.4, 1], such as 5/6. The fourth voltage threshold can be set as needed. The fourth voltage threshold can be equal to or different from the third voltage threshold. Furthermore, the fourth voltage threshold can be equal to or different from any one or more of the third voltage threshold, the second voltage threshold, and the first voltage threshold. Exemplarily, the fourth voltage threshold can be greater than the first voltage threshold. The difference between the fourth voltage threshold and the first voltage threshold can be less than a difference threshold. For example, the difference threshold can be within 20% of the first voltage threshold. That is, the fourth voltage threshold can be slightly greater than the first voltage threshold. For example, the first voltage threshold may be 400 mV, and the fourth voltage threshold may be 450 mV.

In one embodiment, the frequency for acquiring water presence information is 2 Hz. The third predetermined time is 6 seconds. The fourth voltage threshold is 450 mV, and the second ratio threshold is 5/6. In this embodiment, the number of times of obtaining the water presence information within the third predetermined time is 12 times. If the number of times of obtaining the water presence information corresponding to the voltage value less than or equal to 450 mV within the third predetermined time is more than 10 times, it can be determined that the sewage chamber is full of sewage. At this point, the suction assembly can optionally be controlled to shut down.

Optionally, the control method may further include following steps: obtaining water presence information within a fourth predetermined time; when a ratio of the number of times of obtaining the water presence information corresponding to the voltage value less than or equal to the fourth voltage threshold to the total number of times of obtaining the water presence information is greater than a third ratio threshold, determining that there is a large amount of water in the sewage chamber, and the third ratio threshold is less than or equal to the second ratio threshold.

Similar to the first predetermined time, the fourth predetermined time can be set based on the detection error tolerance rate. For example, the fourth predetermined time can be in the range of [0.5s, 30s], such as 6s, 10s, 15s, 20s, etc. Similar to the first ratio threshold, the third ratio threshold can be set based on the error tolerance rate. In one embodiment, the third ratio threshold can be any value in the range of [0.4, 1], such as 1/2.

In one embodiment, the frequency for acquiring water presence information is 2 Hz. The second predetermined time is 6 seconds. The fourth voltage threshold is 450 mV, and the third ratio threshold is 5/6. In this embodiment, the number of times of obtaining water presence information within the fourth predetermined time is 12 times. If the number of times of obtaining the water presence information corresponding to the voltage value less than or equal to 450 mV is more than 10 times, it is determined that there is a large amount of water in the sewage chamber, and the suction assembly can be optionally shut down. In this embodiment, the third ratio threshold is equal to the second ratio threshold. As mentioned above, the third ratio threshold can also be less than the second ratio threshold. In one embodiment, the frequency for obtaining water presence information is 2 Hz. The second predetermined time is 6 seconds. The fourth voltage threshold is 450 mV, the second ratio threshold can be 5/6, and the third ratio threshold is 1/2. In this embodiment, the number of times of obtaining the water presence information within the fourth predetermined time is 12 times. If the number of times of obtaining the water presence information corresponding to the voltage value less than or equal to 450mV within the fourth predetermined time period is six or more times, it is determined that a large amount of water is present in the sewage chamber, and the suction assembly may be optionally shut down. If the voltage value corresponding to the water presence information obtained within the fourth predetermined time period is less than or equal to 450mV ten or more times, it is determined that the sewage chamber is full of sewage. In this embodiment, the suction assembly is shut down before the sewage chamber is full, thereby preventing a full sewage chamber from affecting the sewage separation performance within the gas-solid-liquid separation chamber.

According to the above technical solution, by using the different voltage values corresponding to the water presence information, the sewage condition in the sewage chamber can be determined promptly and accurately. This sewage condition can serve as a basis for subsequent control operations (such as shutting down the suction assembly).

Any two of the first predetermined time, the second predetermined time, the third predetermined time and the fourth predetermined time may be equal or different. Any two of the first ratio threshold, the second ratio threshold and the third ratio threshold may be equal or different.

Optionally, the first target amount of water in the above embodiment corresponds to a small amount of water, and the second target amount of water in the above embodiment corresponds to a large amount of water or a full sewage state. In a specific embodiment, the power component can be controlled to shut down when the water level in the suction channel is determined to have reached a small amount of water based on the water presence information. When the water level in the suction channel is determined to have reached a large amount of water or a full sewage state based on the water presence information, the suction assembly can be controlled to shut down.

The following example illustrates an exemplary embodiment of an amount of water determination logic. The voltage threshold, the predetermined time, and the ratio threshold listed below can be adjusted as needed. The amount of water determination logic is as follows:
1. When the voltage value detected by the water presence detector is greater than 400mV (the first voltage threshold), it is determined that there is no water in the suction channel. At this time, the power component and the suction assembly operate normally according to original settings;
2. When the voltage value detected by the water presence detector is less than or equal to 400 mV and greater than 200 mV (the second voltage threshold), it is determined that a small amount of water begins to flow into the suction channel. At this time, the power component can be turned off to prevent sewage from flowing into the power component and affecting its life;
3. When the voltage value detected by the water presence detector is less than or equal to 200 mV (the third voltage threshold) and lasts for more than 1.5 seconds, it is determined that a large amount of water has passed through the suction channel and the sewage chamber is full;
4. When the ratio of voltage values detected by the water presence detector within the last 6 seconds that are less than or equal to 450 mV (the fourth voltage threshold) is greater than 5/6, it is determined that a large amount of water is intermittently shaken into the suction channel due to the user's large shaking amplitude. At this time, it is also determined that the sewage chamber is full, and the suction assembly can be optionally turned off at this time.

Exemplarily, the control method may further include following steps: starting timing when the suction assembly is turned off, to obtain a timing duration, and when the timing duration reaches a target duration threshold, controlling the power component to turn off.

FIG. 5 is a schematic diagram showing a timing sequence of shutting down a cleaning device according to an embodiment of the present application. In this embodiment, the cleaning device is a floor scrubber, the suction assembly is a fan, and the power component is a peristaltic pump. The floor scrubber includes a fan, a peristaltic pump and other peripherals. As shown in FIG. 5, when shutting down, the other peripherals of the floor scrubber are shut down. Compared with other peripherals of the floor scrubber, the fan can be shut down at any time. For example, the fan can be shut down earlier than other peripherals of the floor scrubber. Alternatively, the fan can be shut down at the same time as other peripherals of the floor scrubber. In the embodiment shown in FIG. 5, the fan is shut down after the other peripherals of the floor scrubber are shut down. After a period of time "t" after the fan is shut down, a peristaltic pump is shut down. It can be understood that after the fan is shut down, there is still sewage that is not completely separated in the gas-solid-liquid separation chamber. Therefore, the power component can continue to work for a period of time "t" before being shut down to prevent sewage from accumulating in the gas-solid-liquid separation chamber.

The target duration threshold can be determined based on liquid level information detected by the liquid level detector within the gas-solid-liquid separation chamber. For example, when the liquid level indicated by the liquid level information (i.e., the liquid level within the gas-solid-liquid separation chamber) is within any target liquid level range of at least two liquid level ranges, the preset duration threshold corresponding to the target liquid level range can be used as the target duration threshold. As described above, a total liquid level range from the lowest liquid level to the highest liquid level within the gas-solid-liquid separation chamber can be divided into at least two liquid level ranges. Each liquid level range can have a corresponding preset duration threshold. The preset duration thresholds corresponding to any two liquid level ranges can be the same or different. For example, different liquid level ranges can correspond to different preset duration thresholds. That is, at least two liquid level ranges can have a one-to-one correspondence with at least two different preset duration thresholds. For example, the higher the upper limit of the liquid level range, the larger the corresponding preset duration threshold. For example, in the embodiment described above where the liquid level range includes a first liquid level range and a second liquid level range, after the fan is shut down, if the liquid level indicated by the liquid level information is within the first liquid level range, the target duration threshold is the first duration threshold. If the liquid level indicated by the liquid level information is within the second liquid level range, the target duration threshold is the second duration threshold. The second duration threshold may be greater than the first duration threshold. For example, the first duration threshold may be 6 seconds, and the second duration threshold may be 10 seconds.

The target duration threshold can also be determined based on the mode information of the cleaning device. The cleaning device can have multiple cleaning modes. Each cleaning mode can have a corresponding preset duration threshold. The preset duration thresholds corresponding to any two cleaning modes can be the same or different. For example, different cleaning modes can correspond to different preset duration thresholds. That is, multiple cleaning modes can correspond one-to-one to multiple different preset duration thresholds. In the above-mentioned embodiment where the cleaning mode includes an intensive cleaning mode and a normal cleaning mode, if the cleaning device operates in the normal cleaning mode, the target duration threshold is the first duration threshold. If the cleaning device operates in the intensive cleaning mode, the target duration threshold is the second duration threshold. It can be understood that the amount of sewage corresponding to the intensive cleaning mode per unit time is greater than the amount of sewage corresponding to the normal cleaning mode. Therefore, the second duration threshold can be greater than the first duration threshold. For example, the first duration threshold can be 6 seconds and the second duration threshold can be 10 seconds.

In the above embodiment, when the suction assembly is turned off, the power component is controlled to continue operating within the target time threshold, so that as much incompletely separated sewage in the gas-solid-liquid separation chamber as possible can be pumped into the sewage chamber for storage. Therefore, this solution has a good sewage separation effect.

All or part of the steps in the above-described method for controlling a cleaning device may be executed by a control module in the cleaning device.

According to another aspect of the embodiment of the present application, a storage medium is also provided. The storage medium stores a computer program/instruction, and when the computer program/instruction is executed by the processor, the control method of the cleaning device described above is implemented. The storage medium may include, for example, a read-only memory (ROM), an erasable programmable read-only memory (EPROM), a portable compact disc read-only memory (CD-ROM), a USB memory, or any combination of the above storage medium. A computer-readable storage medium may be any combination of one or more computer-readable storage medium.

Although example embodiments have been described herein with reference to the accompanying drawings, it should be understood that the above example embodiments are merely illustrative and are not intended to limit the scope of the present application. Various changes and modifications may be made therein by those skilled in the art without departing from the scope and spirit of the present application. All such changes and modifications are intended to be included within the scope of the present application as required by the appended claims.

Those skilled in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered beyond the scope of the present application.

In the embodiments provided in the present application, it should be understood that the disclosed devices and methods can be implemented in other ways. For example, the device embodiments described above are merely illustrative. For example, the division of units is merely a logical function division. In actual implementation, other division methods may be used. For example, multiple units or components may be combined or integrated into another device, or some features may be ignored or not performed.

In the description provided herein, a large number of specific details are described. However, it is understood that the embodiments of the present application can be practiced without these specific details. In some instances, well-known methods, structures, and techniques are not shown in detail so as not to obscure the understanding of this description.

Similarly, it should be understood that in order to streamline the present application and aid in understanding one or more of the various application aspects, in the description of the exemplary embodiments of the present application, the various features of the present application are sometimes grouped together into a single embodiment, figure, or description thereof. However, this approach of the present application should not be interpreted as reflecting the intention that the claimed application requires more features than those explicitly recited in each claim. More precisely, as reflected in the corresponding claims, the point of the application is that the corresponding technical problem can be solved with fewer features than all the features of a single disclosed embodiment. Therefore, the claims following the detailed description are hereby expressly incorporated into the detailed description, with each claim itself serving as a separate embodiment of the present application.

Those skilled in the art will understand that, except where mutually exclusive, all features disclosed in this specification (including the accompanying claims, abstract, and drawings), as well as all processes or units of any method or apparatus disclosed herein, may be combined in any combination. Unless expressly stated otherwise, each feature disclosed in this specification (including the accompanying claims, abstract, and drawings) may be replaced by an alternative feature that provides the same, equivalent, or similar purpose.

Furthermore, those skilled in the art will appreciate that although some embodiments described herein include certain features included in other embodiments but not other features, combinations of features from different embodiments are intended to be within the scope of the present application and to form different embodiments. For example, in the claims, any of the claimed embodiments may be used in any combination.

The various component embodiments of the present application can be implemented in hardware, or in a software module running on one or more processors, or in a combination thereof. It will be appreciated by those skilled in the art that a microprocessor or a digital signal processor (DSP) can be used in practice to implement some or all of the functions of the modules in the cleaning device according to the embodiments of the present application. The application can also be implemented as a device program (e.g., a computer program and a computer program product) for executing a part or all of the methods described herein. Such a program implementing the present application can be stored on a computer-readable medium, or can have the form of one or more signals. Such a signal can be downloaded from an Internet website, or provided on a carrier signal, or provided in any other form.

It should be noted that the above embodiments illustrate rather than limit the present application, and that a person skilled in the art may devise alternative embodiments without departing from the scope of the appended claims. In the claims, any reference symbols placed between brackets should not be construed as limiting the claims. The word "comprising" does not exclude the presence of elements or steps not listed in the claims. The word "a" or "an" preceding an element does not exclude the presence of a plurality of such elements. The present application may be implemented by means of hardware comprising several different elements and by means of appropriately programmed computers. In a unit claim enumerating several means, several of these means may be embodied by the same item of hardware. The use of the words first, second, and third etc. does not indicate any order. These words may be interpreted as names.

The above description is merely a specific embodiment or illustration of a specific embodiment of the present application, and the scope of protection of the present application is not limited thereto. Any changes or substitutions that can be easily conceived by a person skilled in the art within the technical scope disclosed in the present application should be included in the scope of protection of the present application. The scope of protection of the present application should be based on the scope of protection of the claims.

## Claims

1. A control method configured for a cleaning device, **characterized in that**, the cleaning device comprises a sewage tank, a suction pipe, a suction assembly, and a power component; the sewage tank comprises a sewage chamber and a gas-solid-liquid separation chamber; an outlet of the suction pipe is connected to the gas-solid-liquid separation chamber; the suction assembly is configured to provide power to cause soiling to enter the gas-solid-liquid separation chamber via the suction pipe; the power component is connected to the sewage chamber, and is configured to provide power to cause sewage to flow into the sewage chamber from the gas-solid-liquid separation chamber;
the control method comprises:
in response that the suction assembly is switched on, starting the power component to drive the sewage in the gas-solid-liquid separation chamber to flow into the sewage chamber.

2. The control method according to claim 1, wherein a liquid level detector is provided in the gas-solid-liquid separation chamber for detecting a liquid level in the gas-solid-liquid separation chamber, and the control method further comprises:
acquiring liquid level information detected by the liquid level detector;
in response that the liquid level indicated by the liquid level information is within any target liquid level range of at least two liquid level ranges, controlling the power component to operate according to a power corresponding to the target liquid level range;
wherein the at least two liquid level ranges do not overlap with each other, and the higher a upper limit of the liquid level range, the greater a corresponding power of the power component.

3. The control method according to claim 1, wherein the cleaning device has a plurality of cleaning modes; the control method further comprises:
acquiring mode information of the cleaning device, wherein the mode information is used to indicate a current cleaning mode of the cleaning device, the current cleaning mode is one of the plurality of cleaning modes;
controlling the power component to operate according to a power corresponding to the current cleaning mode.

4. The control method according to claim 3, wherein the cleaning device further comprises a dirt detector, which is used to detect a dirt value of an area to be cleaned, and the dirt value represents a level of soiling of the area to be cleaned, the plurality of cleaning modes correspond to a plurality of levels of soiling one by one, the higher the level of soiling, the greater the power of the power component corresponding to the cleaning mode that is corresponding to the level of soiling.

5. The control method according to claim 1, further comprising:
acquiring power information of the suction assembly, wherein the power information is used to indicate a current suction power of the suction assembly;
controlling the power component to operate according to a power corresponding to the current suction power of the suction assembly;
wherein the greater the suction power of the suction assembly, the greater the corresponding power of the power component.

6. The control method according to any one of claims 1 to 5, wherein the power component is a gas power component, and the cleaning device further comprises a suction channel, and the gas power component is connected to the sewage chamber through the suction channel to suck gas in the sewage chamber through the suction channel; a water presence detector is provided in the suction channel; the water presence detector is used to detect whether there is water in the suction channel; the control method further comprises:
obtaining water presence information detected by the water presence detector;
in response that water is determined to be in the suction channel based on the water presence information or an amount of water in the suction channel is determined to be reaching a first target amount of water based on the water presence information, controlling the power component to close; and/or,
in response that the amount of water in the suction channel is determined to be reaching a second target water volume based on the water presence information, controlling the suction assembly to close.

7. The control method according to claim 6, wherein the water presence detector comprises an electrode group comprising two electrodes, the water presence information is voltage information related to voltage at both ends of the electrode group, and the control method further comprises:
in response that a voltage value corresponding to the water presence information is greater than a first voltage threshold, determining that there is no water in the suction channel;
in response that the voltage value corresponding to the water presence information is less than or equal to the first voltage threshold, determining that there is water in the suction channel.

8. The control method according to claim 7, wherein the control method further comprises:
in response that the voltage value corresponding to the water presence information is less than or equal to the first voltage threshold and greater than a second voltage threshold, determining that there is a small amount of water in the suction channel;
in response that the voltage value corresponding to the water presence information is less than or equal to the second voltage threshold, determining that there is a large amount of water in the suction channel and/or the sewage chamber is full of sewage.

9. The control method according to claim 8, wherein the first target amount of water is an amount of water corresponding to a small amount of water, and the second target amount of water is an amount of water corresponding to a large amount of water or an amount of water corresponding to the sewage being full.

10. The control method according to claim 7, wherein the control method further comprises:
obtaining water presence information for multiple times within a first predetermined time;
in response that a ratio of a number of times that the water presence information indicates that there is water in the suction channel to a total number of times of obtaining the water presence information is greater than a first ratio threshold, determining that the sewage chamber is full of sewage.

11. The control method according to claim 7, wherein the control method further comprises:
obtaining the water presence information within a second predetermined time;
in response that the voltage values corresponding to all the obtained water presence information are less than or equal to a third voltage threshold, determining that the sewage chamber is full of sewage;
and/or,
obtaining the water presence information multiple times within a third predetermined time;
in response that a ratio of a number of times of obtaining the water presence information corresponding to the voltage value less than or equal to a fourth voltage threshold to the total number of times of obtaining the water presence information is greater than a second ratio threshold, determining that the sewage chamber is full of sewage;
and/or,
obtaining the water presence information multiple times within a fourth predetermined time;
in response that a ratio of the number of times of obtaining the water presence information corresponding to the voltage value less than or equal to the fourth voltage threshold to the total number of times of obtaining the water presence information is greater than a third ratio threshold, determining that there is a large amount of water in the sewage chamber, and the third ratio threshold is less than or equal to the second ratio threshold.

12. The control method according to any one of claims 1 to 5, wherein the control method further comprises:
in response that the suction assembly is turned off, starting timing to obtain a timing duration;
in response that the timing duration reaches a target duration threshold, controlling the power component to turn off.

13. A cleaning device, **characterized in that** the cleaning device comprises: a sewage tank, a suction pipe, a suction assembly, a power component, and a control module; the sewage tank comprising a sewage chamber and a gas-solid-liquid separation chamber; an outlet of the suction pipe connected to the gas-solid-liquid separation chamber; the suction assembly providing power to cause soiling to enter the gas-solid-liquid separation chamber via the suction pipe; the power component connected to the sewage chamber to provide power to cause sewage to flow into the sewage chamber from the gas-solid-liquid separation chamber;
the control module being used to perform following operations:
in response that the suction assembly is switched on, starting the power component to drive the sewage in the gas-solid-liquid separation chamber to flow into the sewage chamber.

14. A computer-readable storage medium, **characterized in that** the computer-readable storage medium is stored with computer instruction, when the computer instruction are executed by a processor, the control method of the cleaning device according to any one of claims 1 to 12 is implemented.
